# EUROPEAN PATENT SPECIFICATION

(11) **EP 3 179 760 B1**
(45) Date of publication and mention of the grant of the patent: **04.03.2020**
(21) Application number: 15857559.7
(22) Date of filing: 07.10.2015
(51) Int. Cl.: H04W 16/26, H04W 4/48, H04W 16/02, H04W 16/30, H04B 17/10

(54) **ANTENNA CONTROL DEVICE AND DISTRIBUTED ANTENNA SYSTEM**
ANTENNENSTEUERUNGSVORRICHTUNG UND VERTEILTES ANTENNENSYSTEM
DISPOSITIF DE COMMANDE D'ANTENNE ET SYSTÈME D'ANTENNES DISTRIBUÉES

(30) Priority: 04.11.2014 JP 2014224449
(43) Date of publication of application: 14.06.2017
(73) Proprietor: Mitsubishi Electric Corporation, Chiyoda-ku Tokyo 100-8310 (JP)
(72) Inventor: NISHIMOTO, Hiroshi, Tokyo 100-8310 (JP); UMEDA, Shusaku, Tokyo 100-8310 (JP); TSUKAMOTO, Kaoru, Tokyo 100-8310 (JP); KINOSHITA, Yusuke, Tokyo 100-8310 (JP); TSUJI, Kazuyoshi, Tokyo 100-8310 (JP); OKAZAKI, Akihiro, Tokyo 100-8310 (JP)
(74) Representative: Pfenning, Meinig & Partner mbB
(86) International application number: PCT/JP2015/078501
(87) International publication number: WO 2016/072205

(56) References cited:
- WO-A1-01/59874
- GB-A- 2 480 485
- NEIL BILCLIFF NEIL TURNER: "AN ACTIVE ADAPTIVE DISTRIBUTED ANTENNA SYSTEM", IP.COM JOURNAL, IP.COM INC., WEST HENRIETTA, NY, US, 23 August 2002 (2002-08-23), XP013004358, ISSN: 1533-0001
- KARAMAN MELIH A ET AL: "Spectrum-Aware Dynamic Frequency Reuse (SADFR) for SON-based OFDM a HetNets", 2014 IEEE WIRELESS COMMUNICATIONS AND NETWORKING CONFERENCE (WCNC), IEEE, 6 April 2014 (2014-04-06), pages 2558-2563, XP032683027, DOI: 10.1109/WCNC.2014.6952791 [retrieved on 2014-11-11]
- NORIO SENDA ET AL.: 'Train Communication System using Millimeter Wave' IEICE TECHNICAL REPORT vol. 104, no. 599, 21 January 2005, pages 119 - 123, XP008184544

## Description

### Field

The present invention relates to an antenna control device that controls a plurality of antennas disposed in a distributed manner and to a related distributed antenna system.

### Background

In high-speed land-mobile environments, e.g., expressways and railways, the direction of movement is fixed by a track or the like in many cases. In a case where a mobile station that moves at a high speed is provided with radio communication, it is preferable for the antenna facility on the ground to have a linearly-distributed antenna configuration in which antennas are disposed in a distributed manner along the path of the mobile station. Hereinafter, a "linear cell" refers to a given communication area in which an identical signal is transmitted and received at an identical frequency and in synchronization through a plurality of consecutive linearly-distributed antennas.

It is possible to implement a linear cell, for example, in a form where a single communication modem is connected by an optical fiber or the like to a plurality of linearly-distributed antennas or in a form where communication modems installed at the respective antennas are synchronized with each other in order to have a common radio signal. Patent Literature 1 discloses a technique to improve the communication quality within a linear cell by means of adjusting the timing of the transmission and reception at each antenna.

In the linear cell, the communication area is limited to being within the path of a mobile station. Therefore, the radiation direction and the directionality of the antennas on the ground are limited to being within the path, and accordingly a high-efficiency and high-quality radio link can be achieved. In Non Patent Literature 1, a short-range linear cell has been proposed in which the antenna directionality is narrowed and the radiation direction and the reception direction are directed along the path of a mobile station. By using a directional antenna, the communication area covered by a single antenna can be extended when compared with a nondirectional antenna. This can reduce the number of installed antennas.

When constructing a radio communication system, in order to ensure user throughput, a multi-linear-cell configuration is appropriate in which a plurality of short-range linear cells are arranged linearly so as to cover a wide communication area. However, in Non Patent Literature 1, only a single short-range linear cell is considered and the multi-linear-cell configuration is not considered.

In a conventional cellular communication system, multi cells are configured on a plane, i.e., two-dimensionally. Therefore, frequency reuse is performed in which a plurality of radio frequencies are prepared and sequentially allocated to each cell or sector so as not to have an identical frequency for adjacent cells or sectors. In this example, a method for sequentially allocating N-frequencies (N is an integer equal to or larger than 1) is referred to as "N-frequency reuse". In a conventional cellular communication system, in order to suppress inter-cell interference or inter-sector interference, which occurs two-dimensionally, three or more-frequency reuse is required.

Meanwhile, in the multi-linear-cell configuration, the communication area is linear, i.e., unidimensional. Therefore, the number of radio frequencies can be reduced when compared to the planar multi cells described above, and accordingly there is a possibility that a system with two-frequency reuse can be constructed. This means that when interference between adjacent cells is to be suppressed, it is only necessary to allocate a frequency to each multi cell that is different from the frequency allocated to that cell's adjacent multi cells. Accordingly, it is possible to allocate two frequencies f₁ and f₂ alternately to the linearly-adjacent multi cells.

Patent Literature 2 discloses a distributed antenna system for use in an in-building cellular telephone network including a base transmission station and a mobile station and a distributed antenna which comprises a plurality of serially interconnected radiant segments. A delay element is provided between two of the plurality of radiant segments to introduce a delay in a transmission between the base transmission station and the mobile station. The base transmission station can control which antenna segment radiates and transmit through the antenna segment closest to the mobile station.

### Citation List

### Patent Literature

Patent Literature 1: Japanese Patent Application Laid-open No. 2013-98783
Patent Literatur 2: WO 01/59874 A1

### Non Patent Literature

Non Patent Literature 1: Norio SENDA, Yuichi TANAKA, Masao NAKAGAWA "Train Communication System using Millimeter Wave", The Institute of Electronics, Information and Communication Engineers Technical Report, CS2004-203, JAN 2005.

### Summary

### Technical Problem

However, in the case where the multi-linear cell is configured by using short-range linear cells and where two-frequency reuse is performed, because the antenna directionality is directed in the movement direction, there is a problem in that overreach occurs in which a radio wave reaches the adjacent cell but one that uses an identical frequency, and interferes with this second adjacent cell. This may cause degradation of the communication quality.

The present invention has been achieved to solve the above problems, and an object of the present invention is to provide an antenna control device that is capable of reducing interference with another linear cell that uses an identical frequency, thereby enabling improvement of the communication quality in a radio communication system that has a multi-linear-cell configuration.

### Solution to Problem

In order to solve the above problems and achieve the object, an aspect of the present invention is an antenna control device to control a plurality of antennas used for communicating with a mobile station that moves along a predetermined path in a radio communication system that includes a plurality of linear cells, each of which is formed by the antennas and in each of which each of the antennas sets a directionality in a same direction as a path of the mobile station and transmits an identical signal at an identical frequency, and that has two frequencies recurrently allocated in such a manner that adjacent linear cells use different frequencies for transmission. The antenna control device adjusts, in each of the linear cells, power distribution to each of the antennas that form the linear cell so as to be gradually decreased with distance in a direction of antenna directionality of each of the antennas. The solution is embodied in the appended independent claim 1 related to an antenna control device and in the independent claim 8 related to a distributed antenna system.

### Advantageous Effects of Invention

According to the present invention, it is possible to obtain an antenna control device that is capable of reducing interference with another linear cell that uses an identical frequency, thereby enabling improvement of the communication quality.
[information for the printer: please amend all the occurrences of the terms "embodiment"/"embodiments" with the terms "aspect"/"aspects" in the remaining part of the description]

### Brief Description of Drawings

FIG. 1 is a diagram illustrating an example configuration of a radio communication system and problems that are assumed for each embodiment.
FIG. 2 is a diagram illustrating problems of a conventional radio communication system.
FIG. 3 is a diagram illustrating an example of a radio communication system according to a first embodiment.
FIG. 4 is a diagram illustrating a modification of the radio communication system according to the first embodiment.
FIG. 5 is a flowchart illustrating an example of an operation of a delay adjustment device according to the first embodiment.
FIG. 6 is a diagram illustrating an image of power adjustment performed by an antenna control device.
FIG. 7 is a flowchart illustrating an example of an operation of the antenna control device according to the first embodiment.
FIG. 8 is a diagram illustrating the effects of the first embodiment.
FIG. 9 is a diagram illustrating an example of a radio communication system according to a second embodiment.
FIG. 10 is a flowchart illustrating an example of an operation of an antenna control device according to the second embodiment.
FIG. 11 is a diagram illustrating the effects of the second embodiment.
FIG. 12 is a diagram illustrating an installation example of linearly-distributed antennas that constitute a radio communication system according to a third embodiment.
FIG. 13 is a flowchart illustrating an example of an operation of an antenna control device according to the third embodiment.
FIG. 14 is a diagram illustrating an example of hardware for implementing a delay adjustment device and an antenna control device.

### Description of Embodiments

An antenna control device, an antenna adjustment method, and a distributed antenna system according to exemplary embodiments of the present invention will be explained below in detail with reference to the drawings. In each embodiment, for the purpose of simplifying the description, a case of a downlink for transmitting a radio signal from linearly-distributed antennas on the ground to a mobile station is described. However, the present invention is also applicable to a case of an uplink for transmitting a radio signal from a mobile station to linearly-distributed antennas. The present invention is not limited by each embodiment described below.

System configurations and problems to be solved that are assumed in each embodiment are described first.

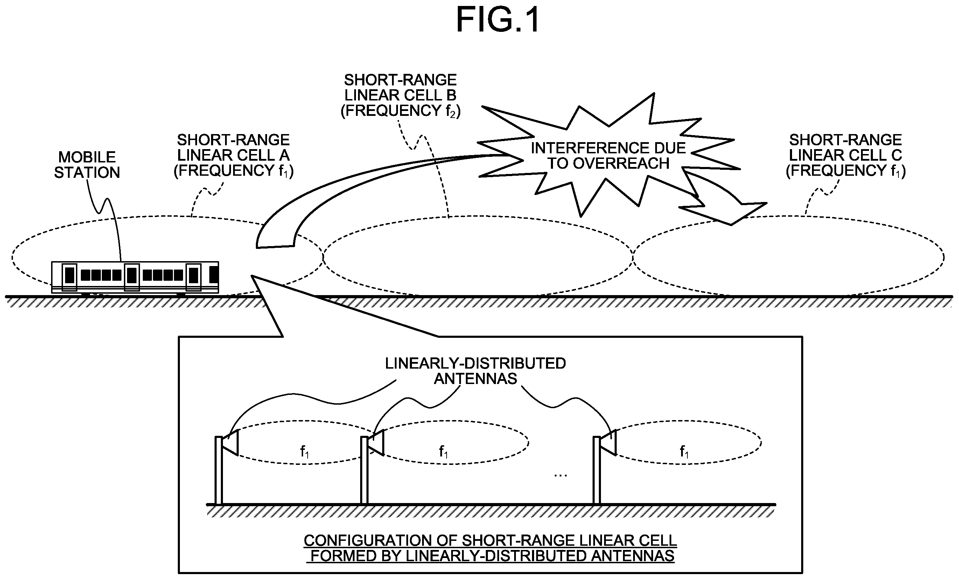

FIG. 1 is a diagram illustrating an example configuration of a radio communication system and problems that are assumed for each embodiment. As illustrated in FIG. 1, in each embodiment, it is assumed that a radio communication system uses a configuration in which a communication area is linearly formed: specifically, a multi-linear-cell configuration in which a plurality of short-range linear cells are disposed linearly. In this radio communication system, it is assumed that radio communication is conducted through a communication device incorporated in a mobile object that moves along a predetermined path, such as a railway train or an automobile running on an expressway, or radio communication is conducted through an independent communication device that moves with a mobile object. Hereinafter, a communication device incorporated in a mobile object and a communication device that moves with a mobile object are collectively referred to as a "mobile station". Further, in the radio communication system in each embodiment, a case is assumed where a frequency is allocated to each of the short-range linear cells disposed linearly by using two-frequency reuse. In the example illustrated in FIG. 1, short-range linear cells A, B, and C are disposed linearly. A frequency f₁ is allocated to the short-range linear cells A and C. A frequency f₂, which is different from the frequency f₁, is allocated to the short-range linear cell B. As illustrated in FIG. 1, each short-range linear cell is formed by a plurality of linearly-distributed antennas that transmit radio signals that have the short-range linear cell's own allocated frequency. In the following descriptions, "linearly-distributed antennas" are sometimes simply referred to as "antennas". Similarly, a "short-range linear cell" is sometimes simply referred to as a "cell". For the sake of the description, it is assumed that a mobile station that is present in the short-range linear cell A travels toward the short-range linear cells B and C, and respective antennas that form each short-range linear cell are set to radiate a radio wave in the same direction as the travelling direction of a mobile station. In each embodiment of the present invention, the radio-wave radiation direction of the antennas is not limited thereto. It is also possible that a short-range linear cell is formed such that antennas radiate a radio wave in a direction opposite to the traveling direction of a mobile station. Further, it is also possible that antennas radiate a radio wave in the traveling direction and a direction opposite thereto by using different frequencies so as to form two different short-range linear cells in the same area.

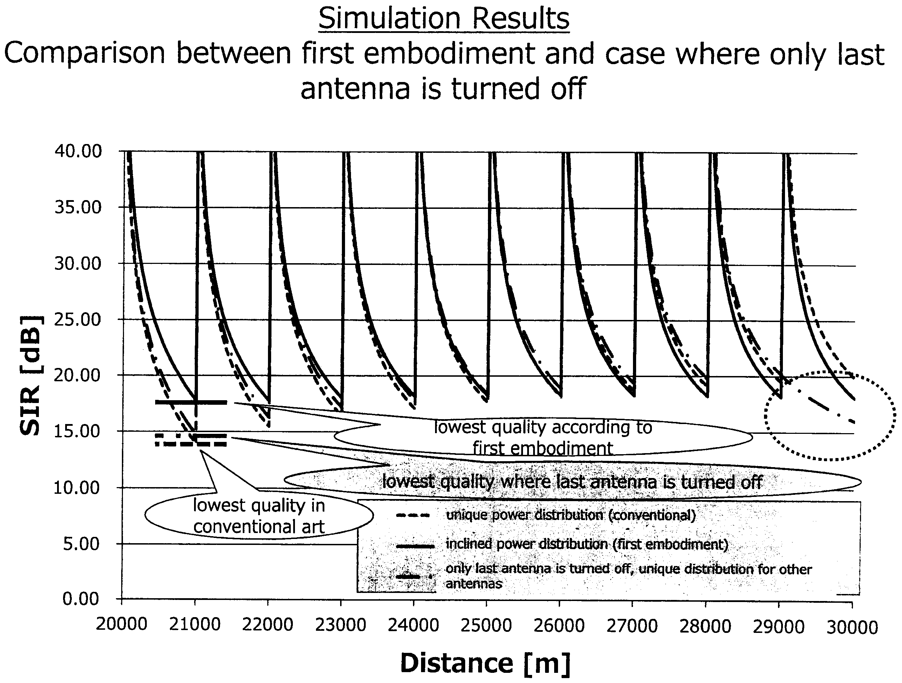

In a case where the radio communication system uses the configuration example illustrated in FIG. 1, a signal transmitted from the short-range linear cell A, to which the frequency f₁ is allocated, may overreach the short-range linear cell C, to which an identical frequency is allocated, and this may cause inter-cell interference. This problem is described with reference to FIG. 2.

FIG. 2 is a diagram illustrating problems of a conventional radio communication system in which the radio communication system is configured as illustrated in FIG. 1. In FIG. 2, in order to describe the problem of interference between the short-range linear cell A and the short-range linear cell C, a part of the description regarding the short-range linear cell B that uses a different frequency f₂ is omitted. Further, for the purpose of simplifying the descriptions, the short-range linear cells A to C are assumed to be in a line-of-sight environment and there are no buildings or the like. Each cell is formed by 10 linearly-distributed antennas spaced apart from each other by 1 km. Each of the antennas radiates a signal horizontally in the same direction with a transmission power of 0 dBm. Therefore, the total transmission power within a single cell is 10 dBm. The frequency f₁ is assumed to be 45 GHz, which is included in the millimeter waveband. For the purpose of simplifying the description, rain attenuation and atmospheric attenuation that are specific to the millimeter waveband are not taken into account. In the graph in FIG. 2, the horizontal axis represents the distance from an antenna at the edge of the short-range linear cell A: specifically, a distance (measurement unit: m) from an antenna installed at a position farthest from the short-range linear cell C, and the vertical axis represents reception field intensity (measurement unit: dBm). As can be understood from the graph, a signal radiated from the short-range linear cell A leaks into the area of the short-range linear cell C. Referring to the combined intensity of all the antennas, the minimum value of the ratio of a desired signal level of the short-range linear cell C to the level where interference by the short-range linear cell A occurs, i.e., the minimum value of a signal-to-interference power ratio (SIR), is approximately 14 dB. This is not desirable because the SIR is too low to perform high-capacity transmission.

In each embodiment, an explanation will be given of an antenna control device, an antenna adjustment method, and a distributed antenna system that are capable of solving the above problems.

### First embodiment.

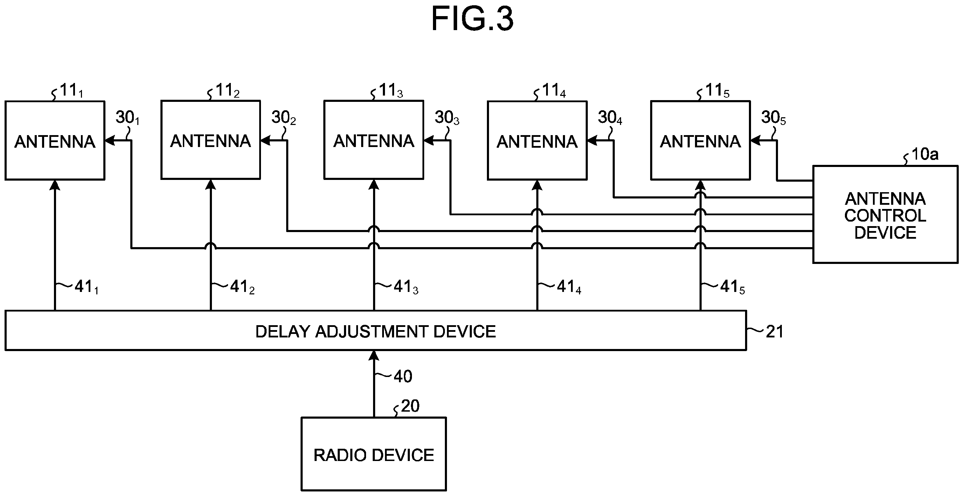

FIG. 3 is a diagram illustrating an example of a radio communication system according to a first embodiment. FIG. 3 illustrates a configuration on the ground that is necessary for implementing a single short-range linear cell. In FIG. 3, for the purpose of simplifying the descriptions, a single short-range linear cell is formed by five antennas 11₁ to 11₅ disposed in a linearly-distributed manner. However, the number of antennas that form a single short-range linear cell is not limited thereto. There can be any number of antennas that is greater than one.

As illustrated in FIG. 3, a single short-range linear cell is implemented by an antenna control device 10a that controls a plurality of linearly-distributed antennas, the antennas 11₁ to 11₅ that are linearly-distributed antennas, and a delay adjustment device 21 that adjusts the delay to be added to a signal output from a radio device 20 to an optimal amount for the antennas 11₁ to 11₅ and that outputs the signal to each antenna.

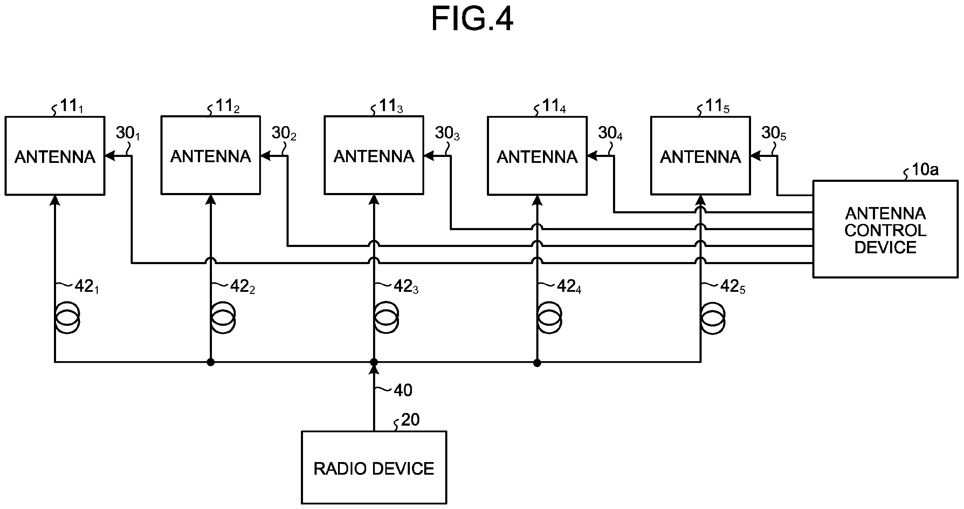

Operations of each device illustrated in FIG. 3 are described here. The radio device 20 performs a signal modulation process and a radio-signal waveform generation process in order to generate a signal to be transmitted in a short-range linear cell, i.e., a radio signal to be transmitted through the antennas 11₁ to 11₅. The generated radio signal is output to the delay adjustment device 21 via a signal line 40. The delay adjustment device 21 adjusts the delay amount of the radio signal input from the signal line 40, and outputs the radio signal to the antennas 11₁ to 11₅ via signal lines 41₁ to 41₅, respectively. The delay-amount adjustment is not limited to adjustment by the delay adjustment device 21. For example, as illustrated in FIG. 4, it is also possible that the delay amount is adjusted by changing the physical length of a signal line extending to each antenna. In the example illustrated in FIG. 4, the length of the signal lines 42₁ to 42₅ is adjusted so as to optimize the delay amount of a signal to be input to each of the antennas 11₁ to 11₅ from the radio device 20. Instead of adjusting the delay amount by using an independent delay adjustment device 21 or instead of adjusting the delay amount by adjusting the length of a signal line, it is possible that the delay is adjusted at each antenna.

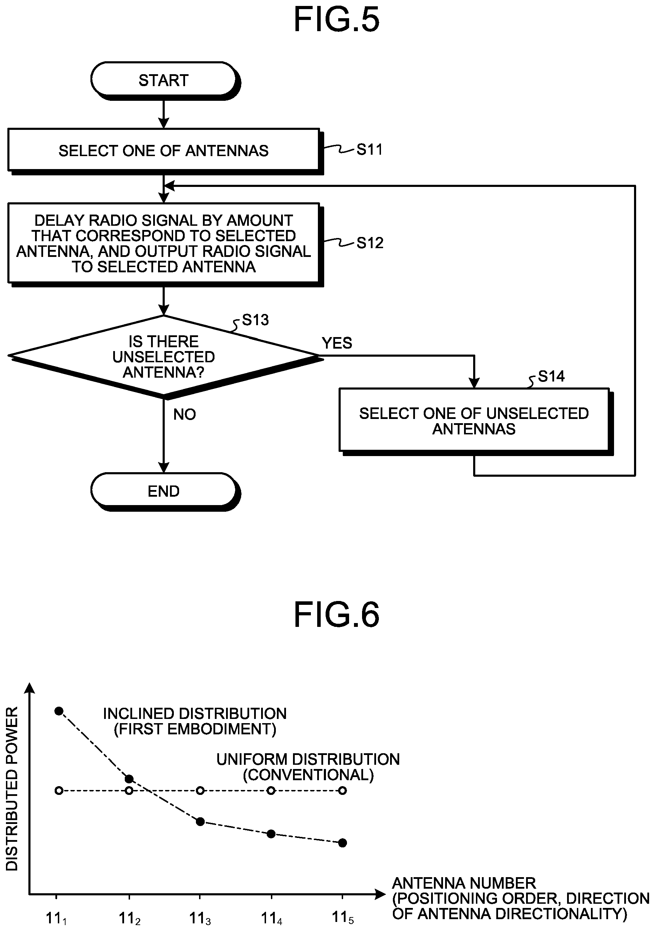

FIG. 5 is a flowchart illustrating an example of the operation of the delay adjustment device 21. When a radio signal generated by the radio device 20 is input to the delay adjustment device 21 through the signal line 40, the delay adjustment device 21 adjusts the delay amount of the radio signal to be output to each antenna according to the procedure illustrated in FIG. 5, for example. The delay amount of a radio signal is adjusted in order to synchronize the timing at which a radio signal transmitted from each antenna reaches a mobile station in a short-range linear cell.

When a radio signal is input through the signal line 40, the delay adjustment device 21 first selects one antenna from the antennas 11₁ to 11₅ (Step S11). At Step S11, the delay adjustment device 21 selects an antenna that initially transmits a radio signal from among the antennas 11₁ to 11₅, i.e., selects the antenna that is furthest away from the adjacent short-range linear cell (hereinafter, "adjacent cell"). The "adjacent cell" in this example is an "adjacent cell" located in the radio-wave radiation direction. For example, in a case where the radio communication system is configured as illustrated in FIG. 1, at Step S11, the delay adjustment device 21 in the short-range linear cell A selects the antenna furthest away from the short-range linear cell B, which is the adjacent cell. Next, the delay adjustment device 21 delays the radio signal input from the signal line 40 by an amount that corresponds to the antenna that has been selected, and outputs the radio signal to the antenna that has been selected (Step S12). The delay adjustment device 21 stores therein the delay amount for each antenna that is given to the radio signal to be output to that antenna. For example, the delay amount for each antenna, which is given to a radio signal, is determined by defining the position of the boundary between a target cell and its adjacent cell as a reference point and on the basis of the length of the wireless transmission path from each antenna to the reference point and the length of the wired transmission path from the delay adjustment device 21 to each antenna, i.e., on the basis of the length of the transmission path from the delay adjustment device 21 to the reference point through each antenna (hereinafter, "transmission-path length"). Specifically, the delay amount for each antenna is determined in such a manner that the radio signals transmitted by their respective antennas reach the reference point at the same time. The method for determining the reference point is not limited to the above method. It is also possible that the position of an antenna that is closest to the adjacent cell is defined as a reference point. It is also possible that the radio signal to be output to the antenna selected at Step S11 is not delayed, i.e., the radio signal to be output to an antenna that causes a radio signal to be initially transmitted is not delayed.

Next, the delay adjustment device 21 checks whether there is an unselected antenna, i.e., an antenna to which a radio signal with the adjusted delay amount has not yet been output (Step S13). When there is no unselected antenna (NO at Step S13), the delay adjustment device 21 ends the operation. In contrast, when there is an unselected antenna (YES at Step S13), the delay adjustment device 21 selects one of the unselected antennas, specifically, it selects from among the unselected antennas an antenna that transmits a radio signal at the earliest timing (Step S14), and performs Step S12 on the selected antenna as a target to apply a delay to a radio signal to be output to the antenna that has been selected. Thereafter, the delay adjustment device 21 repeatedly performs Steps S12, S13, and S14 until no unselected antenna remains, i.e., until the delay adjustment device 21 has output a radio signal to all of the antennas.

As described above, the delay given to the radio signal to be output to each antenna by the delay adjustment device 21 is determined by the transmission-path length from the delay adjustment device 21 to the reference point through each antenna, and is a fixed value. Therefore, the delay adjustment device 21 can be implemented by a plurality of buffers that correspond to the antennas 11₁ to 11₅, respectively; an input circuit that inputs, to each of the buffers, a radio signal that has been input from the signal line 40; an output circuit that reads and outputs a radio signal from each of the buffers at a point in time when a predetermined time set for each of the buffers has elapsed since a radio signal has been input to each of the buffers; and other devices.

The antenna control device 10a adjusts the power of a signal to be transmitted from each of the antennas 11₁ to 11₅ disposed in a linearly-distributed manner. The antenna control device 10a performs power adjustment on the antennas 11₁ to 11₅ via control media 30₁ to 30₅. In this example, the control media 30₁ to 30₅ can be either wired or wireless control media. In the case where the control media 30₁ to 30₅ are wired, the signal lines 41₁ to 41₅ may be shared with the control media 30₁ to 30₅, respectively, in the vicinity of the antennas 11₁ to 11₅.

FIG. 6 is a diagram illustrating an image of power adjustment performed by the antenna control device 10a. In the graph illustrated in FIG. 6, the horizontal axis represents the antenna number according to the antenna positioning order. This shows the direction of antenna directionality, which is the directionality forming direction of each antenna. The direction of antenna directionality of each antenna is directed in the direction from the antenna 11₁ to the antenna 11₅; specifically, the traveling direction of a mobile station that serves as a communication counterpart of the radio device 20. The vertical axis represents the distributed power.

Conventionally, power is uniformly distributed and transmitted to all the antennas without controlling the power to each antenna. In contrast to this, in the present embodiment, in accordance with the communication conditions that depend on the communication environment, the required communication speed, and other factors, the antenna control device 10a performs inclined distribution in such a manner as to distribute the greatest power to the antenna 11₁, which is the farthest antenna relative to the direction of antenna directionality, and to gradually decrease the power in the direction of the antenna directionality. It is only essential that the communication conditions include one or more conditions that affect the communication, such as the communication environment and the required communication speed, which is the communication speed required of the system. For example, the communication environment is weather indicating the amount of rainfall or other factors. The antenna control device 10a performs the inclined distribution in the manner as described above. Therefore, while maintaining the field intensity within the target cell, the antenna control device 10a can reduce interference with another cell that is present in the directionality forming direction and that uses an identical frequency. The antenna control device 10a determines the power to be allocated to the antennas 11₁ to 11₅ in such a manner that the amount of interference with another short-range linear cell becomes a value within a predetermined range, where the other short-range linear cell is different from the short-range linear cell formed by the antennas 11₁ to 11₅ but still uses an identical frequency to the short-range linear cell formed by the antennas 11₁ to 11₅.

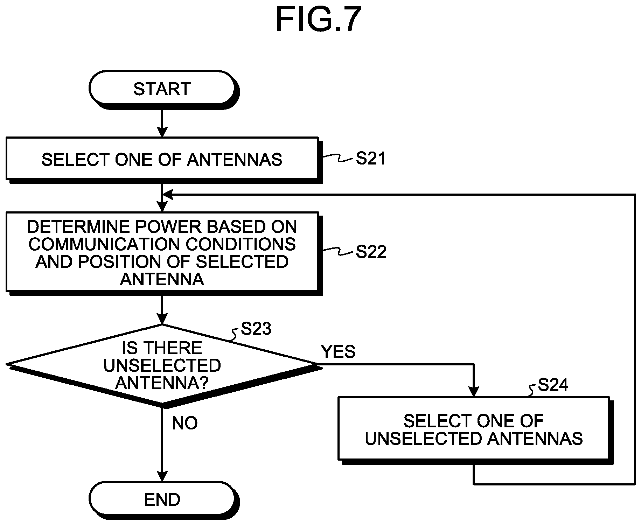

FIG. 7 is a flowchart illustrating an example of the operation of the antenna control device 10a. For example, according to the procedure illustrated in FIG. 7, the antenna control device 10a adjusts the power of a signal to be transmitted from each of the antennas 11₁ to 11₅.

First, the antenna control device 10a selects one antenna from the antennas 11₁ to 11₅ (Step S21). Next, in accordance with the communication conditions and the position of the antenna that has been selected, the antenna control device 10a determines the power of the radio signal to be transmitted from the antenna that has been selected (Step S22). At Step S22, for example, the antenna control device 10a calculates the distance from the antenna that has been selected to the position of the boundary between a target cell and its adjacent cell on the basis of the position of the antenna that has been selected and the position of the boundary between the target cell and its adjacent cell. On the basis of the calculated distance and the communication conditions, the antenna control device 10a determines the power of the radio signal to be transmitted from the antenna that has been selected. Because the power of the radio signal is attenuated in proportion to the propagation distance, the antenna control device 10a calculates the power of the radio signal to be transmitted from the antenna that has been selected on the basis of the calculated distance, such that the power of the radio signal transmitted from the antenna that has been selected, at the cell edge, i.e., at the boundary point between the target cell and its adjacent cell, becomes equal to or lower than a specified value. At this point in time, the antenna control device 10a takes the communication conditions into account. The attenuation amount of power of a radio signal varies according to the weather. For example, when it is raining, the attenuation amount is increased. Therefore, for example, the antenna control device 10a stores a plurality of correction coefficients therein, which are predetermined according to the assumed communication conditions, and multiplies the power, determined on the basis of the distance from the antenna that has been selected to the cell edge, by the correction coefficient that corresponds to the communication conditions at the time of determining the power in order to eventually determine the power. Because the distance from each antenna to the cell edge is fixed in advance, it is also possible that the antenna control device 10a has information stored therein regarding the distance from each antenna to the cell edge or regarding the power of the radio signal to be transmitted from each antenna. It is satisfactory if the antenna control device 10a obtains the communication conditions regularly or irregularly from an external network or the like (not illustrated in FIG. 3 or other diagrams).

Next, the antenna control device 10a checks whether there is an unselected antenna, i.e., an antenna for which the power of the radio signal to be transmitted has not yet been determined (Step S23). When there is no unselected antenna (NO at Step S23), the antenna control device 10a ends the operation. In contrast, when there is an unselected antenna (YES at Step S23), the antenna control device 10a selects one of the unselected antennas (Step S24) and performs Step S22 on the selected antenna as a target to determine the power. Thereafter, the antenna control device 10a repeatedly performs Steps S22, S23, and S24 until no unselected antenna remains, i.e., until the antenna control device 10a has determined the power of the radio signal to be transmitted for all of the antennas.

For example, the antenna control device 10a performs the operation illustrated in FIG. 7 in a given cycle. Alternatively, the antenna control device 10a may obtain the communication conditions from an external device in a given cycle and then perform the operation illustrated in FIG. 7 when a change in the communication conditions is detected, i.e., when currently-obtained communication conditions are different from previously-obtained communication conditions. Furthermore, upon receiving an instruction from an external device, the antenna control device 10a may perform the operation illustrated in FIG. 7.

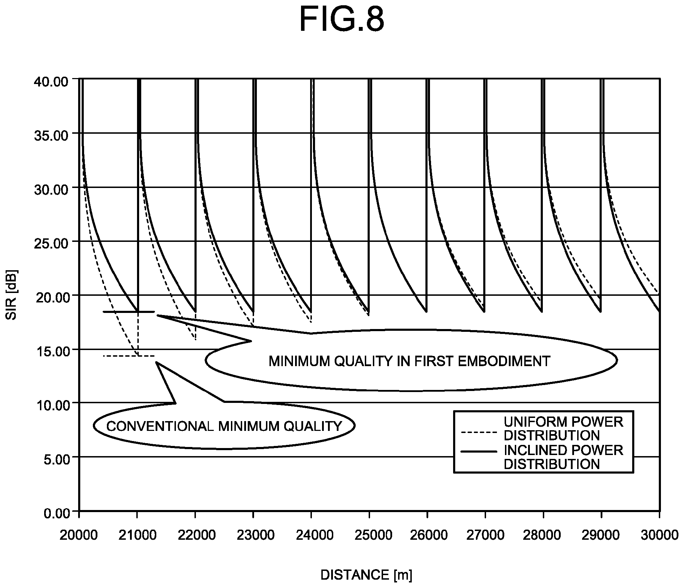

FIG. 8 is a diagram illustrating the effects of the present embodiment. Unlike FIG. 3 to FIG. 6, FIG. 8 illustrates the SIR characteristics in the short-range linear cell C of the multi-linear cell under the same conditions as in FIG. 2 except that the power distribution is different. The total transmission power is identical in the conventional uniform power distribution and in the inclined power distribution in the present embodiment. It can be understood from FIG. 8 that in comparison with the conventional uniform power distribution, by adopting the inclined power distribution according to the present embodiment, the minimum value of the SIR is improved, thereby enabling improvement of the line quality.

As described above, in the present embodiment, in a multi-linear-cell configuration in which short-range linear cells are disposed and connected to each other, an antenna control device individually adjusts the power of linearly-distributed antennas in order that inclined power distribution is performed. That is, the antenna control device reduces the power distributed to the linearly-distributed antennas that form the short-range linear cell gradually in the direction of the antenna directionality. Therefore, while maintaining the field intensity within the target cell, the antenna control device can reduce interference with another cell that uses an identical frequency, and accordingly the communication quality can be improved.

### Second embodiment.

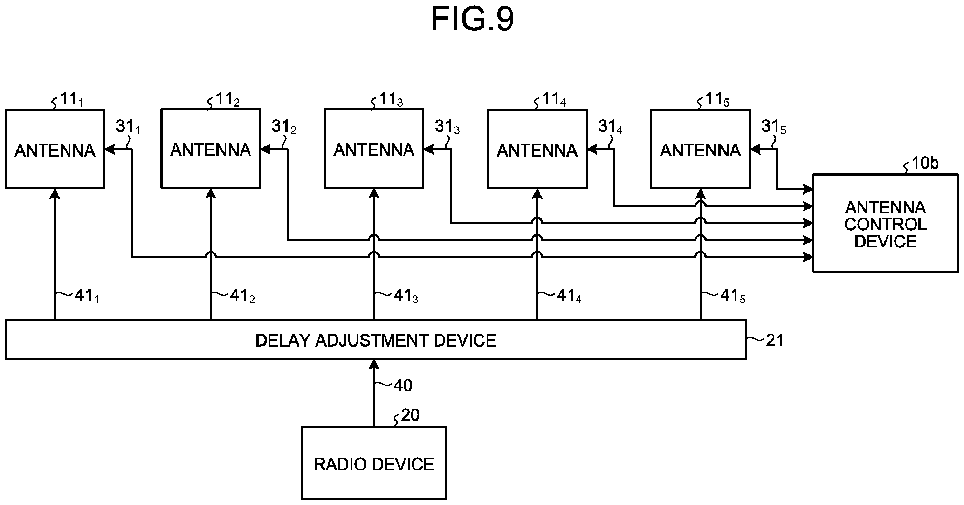

FIG. 9 is a diagram illustrating an example of a radio communication system according to a second embodiment. Similarly to FIG. 3 and FIG. 4 illustrated in the first embodiment, FIG. 9 illustrates a configuration on the ground that is necessary for implementing a single short-range linear cell. In the configuration illustrated in FIG. 9, the antenna control device 10a included in the configuration illustrated in FIG. 3 is replaced by an antenna control device 10b. In the present embodiment, explanations of parts common to the first embodiment are omitted and only different parts are explained.

The antenna control device 10b illustrated in FIG. 9 executes an on-off control on the antennas 11₁ to 11₅ disposed in a linearly-distributed manner. The antenna control device 10b executes the control on each of the antennas via control media 31₁ to 31₅, respectively. The control media 31₁ to 31₅ can be either wired or wireless control media. In the case where the control media 31₁ to 31₅ are wired control media, the signal lines 41₁ to 41₅ may be shared with the control media 30₁ to 30₅, respectively, in the vicinity of the antennas 11₁ to 11₅.

The antenna control device 10b executes antenna on-off control adaptively according to the movement of the mobile station. That is, the antenna control device 10b detects an antenna within the range of which a mobile station is located, selects the antenna within the range of which a mobile station is located and its peripheral antennas, and controls these selected antennas such that they are switched on in order to cause the selected antennas to perform signal transmission. The antenna control device 10b controls unselected antennas such that they switch off in order to cause the unselected antennas to stop signal transmission. It is possible to perform detection of an antenna within the range of which a mobile station is located on the basis of the result of uplink radio communication from the mobile station to the ground, e.g., on the basis of the reception power level of a signal transmitted from the linearly-distributed antenna 11₁ to the linearly-distributed antenna 11₅ and whether a reception acknowledgement signal to a signal transmitted to the mobile station is received or on the basis of other results. As another example, it is possible to obtain from the mobile station its position information provided by a GPS (Global Positioning System) or other systems and to detect an antenna within the range of which the mobile station is located on the basis of the obtained position information. This control makes it possible to suppress unnecessary radiation while maintaining the field intensity in the vicinity of the mobile station. Therefore, interference with another cell that uses an identical frequency can be reduced.

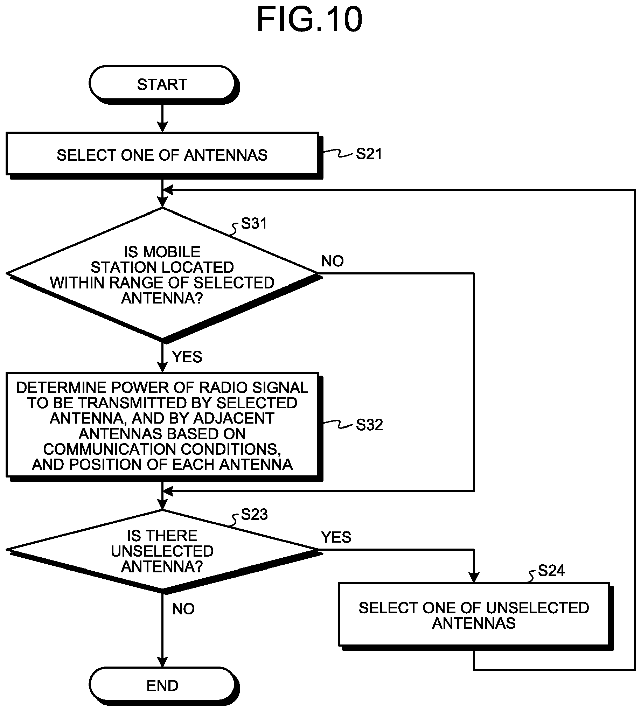

FIG. 10 is a flowchart illustrating an example of an operation of the antenna control device 10b according to the second embodiment. In the flowchart illustrated in FIG. 10, Step S31 is added to the flowchart illustrated in FIG. 7, and Step S22 illustrated in FIG. 7 is replaced by Step S32. Except for Steps S31 and S32, Steps S21, S23, and S24 are the same as the processes denoted by the same step numbers in FIG. 7. Therefore, descriptions thereof are omitted.

After selecting an antenna at Step S21 or S24, the antenna control device 10b checks whether a mobile station is located within the range of the antenna that has been selected (Step S31). When a mobile station is so located (YES at Step S31), the antenna control device 10b determines the power of the radio signal to be transmitted by the antenna that has been selected and by the antennas adjacent to the antenna that has been selected on the basis of the communication conditions and the position of each antenna (Step S32). The "communication conditions" refer to the communication conditions described in the first embodiment. The "position of each antenna" refers to the position of the antenna that has been selected and the position of antennas adjacent to the antenna that has been selected (hereinafter, "adjacent antennas"). At Step S32, the antenna control device 10b determines the power of each individual radio signal to be transmitted from each of the three antennas in total: the one antenna that has been selected and the two adjacent antennas. The method for determining the power of the radio signal to be transmitted from each antenna is the same as in the first embodiment. When a plurality of mobile stations are located within a short-range linear cell, there can be a case where the antenna control device 10b has already determined the power of the radio signal to be transmitted by the antennas adjacent to the antenna that is determined at Step S31 that the mobile station is located within the range thereof. For example, in a state where mobile stations are located within the range of the antennas 11₂ and 11₄ among the antennas 11₁ to 11₅ illustrated in FIG. 9 and where the antenna control device 10b has already determined the power of the radio signal to be transmitted by each of the antennas 11₂, 11₁, and 11₃, then the antenna control device 10b selects the antenna 11₄ at Step S24 and determines that a mobile station is located at Step S31. This case corresponds to the case described above. In such a case, at Step S32, it is also possible that the antenna control device 10b targets, among the adjacent antennas to the antenna that has been selected, an adjacent antenna of which the power of the radio signal to be transmitted has not yet been determined and determines the power of the radio signal to be transmitted from this targeted adjacent antenna. This case can prevent an increase in the number of times the process of determining the transmission power of the radio signal by the antenna control device 10b is performed, i.e., the processing load on the antenna control device 10b can be prevented from being increased more than necessary.

When a mobile station is not located within the range of the antenna that has been selected (NO at Step S31), the antenna control device 10b proceeds to Step S23.

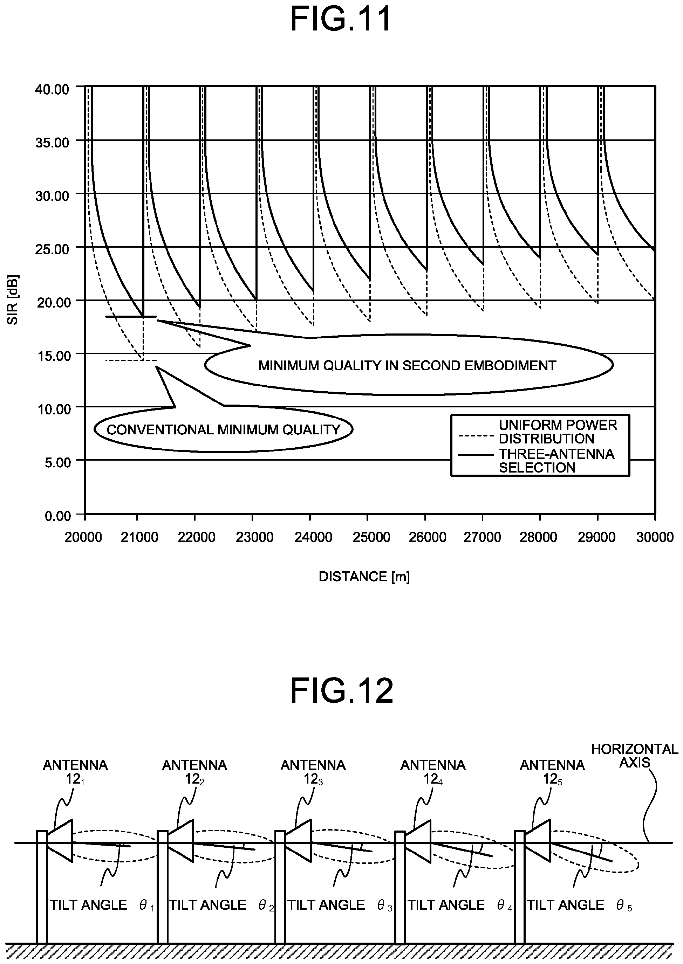

FIG. 11 is a diagram illustrating the effects of the present embodiment. Unlike FIG. 8 illustrated in the first embodiment, FIG. 11 illustrates the SIR characteristics in the short-range linear cell C of the multi-linear cell under the same conditions as in FIG. 2 except that there is on-off control. In the on-off control, three antennas are selected. FIG. 11 illustrates the characteristics when three linearly-distributed antennas in the short-range linear cell A that are closest to the short-range linear cell C are turned on. It is understood from FIG. 11 that in comparison with the conventional method of constant radiation at the same power by all of the antennas, by adopting antenna selection control according to the present embodiment, the minimum value of the SIR is improved, thereby enabling improvement of the line quality.

In the present embodiment, a case has been described in which the antenna control device 10b performs control such that three antennas are switched on and the remaining antennas are switched off where a mobile station is located within the range of the central antenna among the three antennas. However, the number of antennas to be controlled such that they are switched on can be other than three. For example, it is also possible that the antenna control device 10b takes into account the travelling direction of the mobile station and controls in total two antennas such that they are switched on: an antenna within the range of which the mobile station is located and an antenna within the range of which the mobile station will be located later. That is, assuming that the mobile station is located within the range of the antenna 11₂, it is possible that the antenna control device 10b controls the antennas 11₂ and 11₃ such that they are switched on and controls the remaining antennas such that they are switched off.

It is also possible that the antenna control device 10b executes antenna on-off control on the basis of the communication conditions described in the first embodiment. For example, it is possible that the antenna control device 10b adjusts the power to be allocated to a selected antenna on the basis of the communication conditions. Further, it is also possible that the antenna control device 10b changes the number of selected antennas to be controlled such that they are switched on on the basis of the communication conditions.

As described above, in the present embodiment, in a multi-linear-cell configuration in which short-range linear cells are disposed and connected to each other, an antenna control device controls, among linearly-distributed antennas, only antennas in the vicinity of a mobile station such that they are switched on to enable them, and controls the remaining antennas such that they are switched off to disable them. Therefore, while maintaining the field intensity in the vicinity of a mobile station, the antenna control device can reduce interference with another cell that uses an identical frequency, and accordingly communication quality can be improved.

### Third embodiment.

FIG. 12 is a diagram illustrating an installation example of linearly-distributed antennas that constitute a radio communication system according to a third embodiment. FIG. 12 illustrates an example installation of a plurality of linearly-distributed antennas that form a single short-range linear cell. Similarly to the first and second embodiments, it is assumed that a single short-range linear cell is formed by five antennas 12₁ to 12₅ disposed in a linearly-distributed manner.

As illustrated in FIG. 12, in the present embodiment, a different depression angle is given to each antenna so as not to interfere with another cell. The depression angle is equivalent to a tilt angle with respect to the horizontal axis illustrated in FIG. 12. In the following descriptions, the depression angle is described as a "tilt angle". The antennas 12₁ to 12₅ are sequentially disposed in a linearly-distributed manner. The direction from the antenna 12₁ toward the antenna 12₅ is the directionality forming direction. In FIG. 12, the antenna 12₅ is installed at a position closest to another cell with which it may interfere. The antenna 12₅ is the antenna that is more likely to interfere with another cell. In contrast, the antenna 12₁ is the farthest antenna from another cell with which it may interfere. Therefore, when the tilt angles of the antennas 12₁ to 12₅ with respect to the horizontal axis are represented as θ₁ to θ₅, respectively, in the present embodiment, these tilt angles are adjusted so as to satisfy θ₁≤θ₂≤θ₃≤θ₄≤θ₅. With this adjustment, while maintaining the field intensity within the target cell, interference can be reduced with another cell that is present in the directionality forming direction and that uses an identical frequency.

Although not illustrated in FIG. 12, the tilt angle of each antenna is adjusted by an antenna control device (not illustrated). The antenna control device (not illustrated) determines the respective tilt angles of the antennas 12₁ to 12₅ in such a manner that the amount of interference with another short-range linear cell becomes a value within a predetermined range. This other short-range linear cell is different from the short-range linear cell formed by the antennas 12₁ to 12₅ but uses an identical frequency to the short-range linear cell formed by the antennas 12₁ to 12₅. Similarly to the first embodiment, it is also possible that the antenna control device adjusts the tilt angle of each antenna on the basis of the communication conditions. Further, similarly to the second embodiment, it is also possible that the antenna control device selects an antenna within the range of which a mobile station is located and the selected antenna's peripheral antennas and controls the selected antenna such that they are switched on and controls the remaining antennas such that they are switched off. Furthermore, it is possible that the first embodiment and the present embodiment are combined. That is, it is possible that the antenna control device is configured to reduce interference with another cell by performing both of the adjustment of power distribution to each antenna and the adjustment of the tilt angle of each antenna.

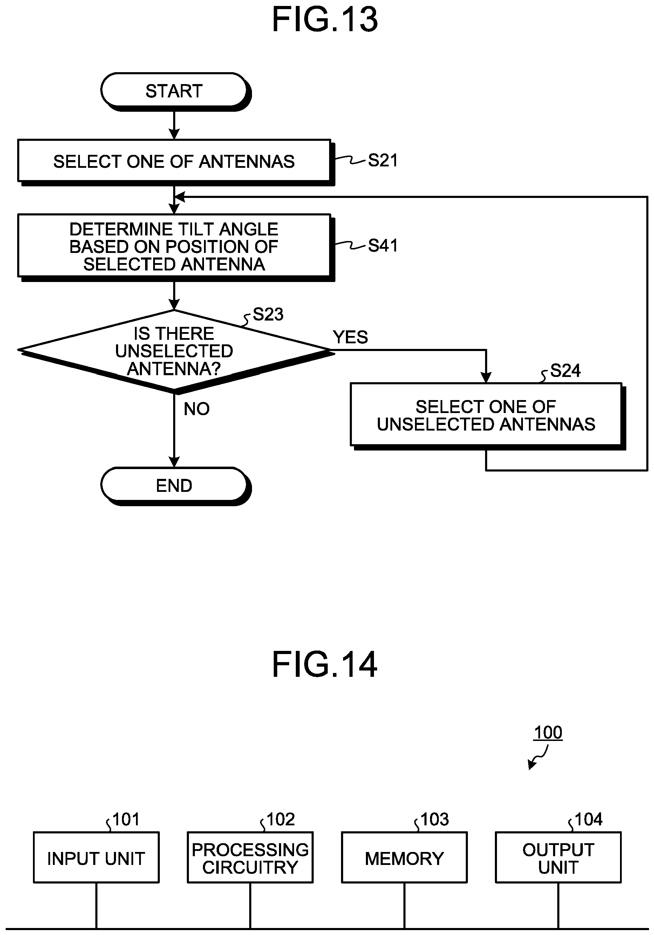

FIG. 13 is a flowchart illustrating an example of an operation of an antenna control device according to the third embodiment. In the flowchart illustrated in FIG. 13, Step S22 in the flowchart illustrated in FIG. 7 is replaced by Step S41. Except for Step S41, the steps are the same as Steps S21, S23, and S24 in the flowchart illustrated in FIG. 7. Therefore, descriptions thereof are omitted. After selecting an antenna at Step S21 or S24, the antenna control device determines the tilt angle at which the antenna that has been selected transmits a radio signal on the basis of the position of the antenna that has been selected (Step S41). For example, the antenna control device calculates the distance from the antenna that has been selected to the cell edge, i.e., the position of the boundary between a target cell and its adjacent cell, on the basis of the position of the antenna that has been selected and the position of the boundary between the target cell and its adjacent cell. On the basis of the calculated distance, the antenna control device determines the tilt angle at which the antenna that has been selected transmits a radio signal. As described above, the antenna control device determines the tilt angle such that, as the distance from an antenna to the cell edge becomes shorter, the tilt angle becomes greater.

Next, there is a description of hardware for implementing the delay adjustment device 21 and the antenna control devices 10a and 10b described in the first to third embodiments. It is possible for the delay adjustment device 21 and the antenna control devices 10a and 10b to be implemented by hardware 100 illustrated in FIG. 14.

In the hardware 100 illustrated in FIG. 14, an input unit 101 is an interface circuit that receives data input from an external device and passes the data to a processing circuitry 102. The processing circuitry 102 is dedicated hardware, i.e., an electronic circuit, or is a processor that executes processes in the delay adjustment device 21 and the antenna control devices 10a and 10b. The processor is, for example, a CPU (central processing unit, which is also referred to as "processing device", "computing device", "microprocessor", "microcomputer", "processor", or "DSP") or a system LSI (Large Scale Integration). A memory 103 is, for example, a nonvolatile or volatile semiconductor memory such as a RAM (Random Access Memory), a ROM (Read Only Memory), a flash memory, an EPROM (Erasable Programmable Read Only Memory), or an EEPROM (Electrically Erasable Programmable Read Only Memory), or is a magnetic disc, a flexible disc, an optical disc, a compact disc, a minidisc, or a DVD (Digital Versatile Disc). An output unit 104 is an interface circuit that transmits data from the processing circuitry 102 or the memory 103 to an external device.

When the processing circuitry 102 is a dedicated electronic circuit, then a single circuit, a combined circuit, a programmed processor, a parallel-programmed processor, an ASIC (Application Specific Integrated Circuit), an FPGA (Field Programmable Gate Array), or a combination thereof corresponds to the processing circuitry 102.

When the processing circuitry 102 is a processor, the delay adjustment device 21 and the antenna control devices 10a and 10b are implemented by software, firmware, or a combination of the software and the firmware. The software or the firmware is described as a program and stored in the memory 103. The processing circuitry 102, which is a processor, reads a program for operating as the delay adjustment device 21 and the antenna control devices 10a and 10b, which has been stored in the memory 103, and executes this program in order to implement the delay adjustment device 21 and the antenna control devices 10a and 10b. The program stored in the memory 103 is also assumed to be a program that causes a computer to implement the delay adjustment device 21 and the antenna control devices 10a and 10b.

It is also possible that some of the delay adjustment device 21 and the antenna control devices 10a and 10b are implemented by a dedicated electronic circuit and others thereof are implemented by software or firmware. For example, it is also possible that the delay adjustment device 21 is implemented by a dedicated electronic circuit while the antenna control devices 10a and 10b are implemented by reading and executing a program stored in the memory 103 by a processor that serves as the processing circuitry 102.

In the manner as described above, the processing circuitry 102 can implement the delay adjustment device 21 and the antenna control devices 10a and 10b by using dedicated hardware, software, firmware, or a combination thereof.

As described above, in the present embodiment, in a multi-linear-cell configuration in which short-range linear cells are disposed and connected to each other, the directionality forming direction of each of the antennas disposed in a linearly-distributed manner is set so as to form a tilt angle that differs between the antennas. With this configuration, while maintaining the field intensity within the target cell, interference with another cell that uses an identical frequency can be reduced similarly to the first and second embodiments.

The configurations described in the above embodiments are only an example of the content of the present invention. The configurations can be combined with other well-known techniques, and part of the configurations can be modified or changed without departing from the scope of the invention.

### Reference Signs List

10a, 10b antenna control device, 11₁, 11₂, 11₃, 11₄, 11₅, 12₁, 12₂, 12₃, 12₄, 12₅ antenna, 20 radio device, 21 delay adjustment device, 30₁, 30₂, 30₃, 30₄, 30₅, 31₂, 31₁, 31₃, 31₄, 31₅ control medium, 40, 41₁, 41₂, 41₃, 41₄, 41₅, 42₁, 42₂, 42₃, 42₄, 42₅ signal line.

## Claims

1. An antenna control device (10a) to control a plurality of antennas (11₁ to 11₅) used for communicating with a mobile station that moves along a predetermined path in a radio communication system that includes a plurality of linear cells, each of which is formed by the antennas (11₁ to 11₅) and in each of which each of the antennas (11₁ to 11₅) sets a directionality in a same direction as a path of the mobile station and transmits an identical signal at an identical frequency, and that has two frequencies recurrently allocated in such a manner that adjacent linear cells use different frequencies for transmission, wherein
the antenna control device (10a) is configured to calculate, for each of the plurality of antennas (11₁ to 11₅), a distance from a position of each antenna to a boundary to a linear cell adjacent thereto, and determine a power of a radio signal to be transmitted from each antenna to become equal to or lower than a specific value at the boundary to the adjacent linear cell on a basis of the calculated distance, and
the antenna control device (10a) is configured to adjust, in each of the linear cells, power distribution to each of the antennas (11₁ to 11₅) that form a first linear cell so as to be gradually decreased with distance in a direction of antenna directionality of each of the antennas (11₁ to 11₅) to a position of the boundary to the adjacent linear cell, which is a second linear cell, so that the minimum value of a signal-to-interference power ratio of a third linear cell that uses an identical frequency to the first linear cell is improved compared to a case where the same total transmission power transmitted from the plurality of the antennas of the antenna control device is uniformly distributed to each of the antennas.

2. The antenna control device (10a) according to claim 1, wherein the antenna control device (10a) is configured to determine power distribution to each of the antennas (11₁ to 11₅) also in accordance with a communication condition.

3. The antenna control device according to claim 1, wherein, in each of the linear cells, the antenna control device is further configured to adjust a depression angle (θ₁ to θ₅) of each of the antennas (12₁ to 12₅) that form the linear cell so as to be gradually increased with distance in a direction of antenna directionality of each of the antennas (12₁ to 12₅).

4. The antenna control device (10b) according to claim 1, wherein
the antenna control device (10b) is configured to select and allocate, in each of the linear cells, power to some of the antennas (11₁ to 11₅) that form a first linear cell.

5. The antenna control device (10b) according to claim 4, wherein the antenna control device (10b) is configured to allocate power to an antenna within a range of which a mobile station is located and an antenna adjacent to the antenna within a range of which the mobile station is located.

6. The antenna control device (10a) according to claim 4, wherein the antenna control device (10a) is configured to determine a selection of the antennas (11₁ to 11₅) also in accordance with a communication condition.

7. The antenna control device (10a) according to claim 2, or 6, wherein the communication condition includes at least one of weather and a required communication speed.

8. A distributed antenna system to form a radio communication system that includes a plurality of linear cells, each of which is formed by a plurality of antennas (11₁ to 11₅) used for communicating with a mobile station that moves along a predetermined path and in each of which each of the antennas (11₁ to 11₅) sets a directionality in a same direction as a path of the mobile station and transmits an identical signal at an identical frequency, and that has two frequencies recurrently allocated in such a manner that adjacent linear cells use different frequencies for transmission, wherein
the distributed antenna system is configured to calculate, for each of the plurality of antennas (11₁ to 11₅), a distance from a position of each antenna to a position of a boundary to a linear cell adjacent thereto, and determine a power of a radio signal to be transmitted from each antenna to become equal to or lower than a specific value at the boundary to the adjacent linear cell on a basis of the calculated distance, and
set, in each of the linear cells, power distribution to each of the antennas (11₁ to 11₅) that form the linear cell, which is a first cell, so as to be gradually decreased with distance in a direction of antenna directionality of each of the antennas (11₁ to 11₅) to a position of the boundary to the adjacent linear cell, which is a second cell, so that the minimum value of a signal-to-interference power ratio of a third linear cell that uses an identical frequency to the first linear cell is improved compared to a case where the same total transmission power transmitted from the plurality of the antennas of the antenna control device is uniformly distributed to each of the antennas.

9. The distributed antenna system according to claim 8, wherein the distributed antenna system is configured to determine power distribution to each of the antennas (11₁ to 11₅) also in accordance with a communication condition.

10. The distributed antenna system according to claim 9, wherein the communication condition includes at least one of weather and a required communication speed.

## Patentansprüche

1. Antennensteuervorrichtung (10a) zum Steuern mehrerer Antennen (11₁ bis 11₅), die zum Kommunizieren mit einer Mobilstation verwendet werden, die sich entlang eines vorgegebenen Weges in einem Funkkommunikationssystem bewegt, das mehrere lineare Zellen aufweist, die jeweils von den Antennen (11₁ bis 11₅) gebildet werden, und in denen die einzelnen Antennen (11₁ bis 11₅) jeweils eine Richtcharakteristik auf eine Richtung einstellen, die der des Weges der Mobilstation gleich ist, und ein identisches Signal mit einer identischen Frequenz senden, und die zwei Frequenzen aufweist, die wiederkehrend auf solche Weise zugeordnet werden, dass einander benachbarte lineare Zellen unterschiedliche Frequenzen zum Senden verwenden, wobei
die Antennensteuervorrichtung (10a) dafür ausgelegt ist, für jede von den mehreren Antennen (11₁ bis 11₅) einen Abstand von einer Position der jeweiligen Antenne zu einer Grenze einer ihr benachbarten linearen Zelle zu berechnen und auf Basis des berechneten Abstands eine Stärke eines Funksignals, das von der jeweiligen Antenne gesendet werden soll, so zu bestimmen, dass sie an der Grenze zur benachbarten linearen Zelle höchstens so groß wird wie ein spezifischer Wert, und
die Antennensteuervorrichtung (10a) dafür ausgelegt ist, in jeder der linearen Zellen eine Leistungsverteilung auf die einzelnen Antennen (11₁ bis 11₅), die eine erste lineare Zelle bilden, so anzupassen, dass sie mit einem Abstand zu einer Position der Grenze der benachbarten linearen Zelle, die eine zweite lineare Zelle ist, in einer Richtung der Richtcharakteristik von jeder der Antennen (11₁ bis 11₅) allmählich abnimmt, so dass der minimale Wert eines Signalleistung-zu-Störleistung-Verhältnisses einer dritten linearen Zelle, die eine identische Frequenz wie die erste lineare Zelle verwendet, im Vergleich zu einem Fall, wo die gleiche Gesamtsendeleistung, die von den mehreren Antennen der Antennensteuervorrichtung gesendet wird, gleichmäßig auf alle Antennen verteilt wird, verbessert ist.

2. Antennensteuervorrichtung (10a) nach Anspruch 1, wobei die Antennensteuervorrichtung (10a) dafür ausgelegt ist, eine Leistungsverteilung auf die einzelnen Antennen (11₁ bis 11₅) auch gemäß einer Kommunikationsbedingung zu bestimmen.

3. Antennensteuervorrichtung nach Anspruch 1, wobei in jeder der linearen Zellen die Antennensteuervorrichtung ferner dafür ausgelegt ist, einen Tiefenwinkel (θ₁ bis θ₅) der einzelnen Antennen (12₁ bis 12₅), welche die lineare Zelle bilden, so anzupassen, dass er mit einem Abstand in einer Richtung der Richtcharakteristik der einzelnen Antennen (12₁ bis 12₅) allmählich größer wird.

4. Antennensteuervorrichtung (10b) nach Anspruch 1, wobei
die Antennensteuervorrichtung (10b) dafür ausgelegt ist, in jeder der linearen Zellen einige von den Antennen (11₁ bis 11₅), die eine erste lineare Zelle bilden, auszuwählen und ihnen Leistung zuzuteilen.

5. Antennensteuervorrichtung (10b) nach Anspruch 4, wobei die Antennensteuervorrichtung (10b) dafür ausgelegt ist, einer Antenne innerhalb eines Bereichs, in dem sich eine Mobilstation befindet, und einer Antenne, die der Antenne innerhalb eines Bereichs, in dem sich die Mobilstation befindet, benachbart ist, Leistung zuzuteilen.

6. Antennensteuervorrichtung (10a) nach Anspruch 4, wobei die Antennensteuervorrichtung (10a) dafür ausgelegt ist, eine Auswahl der Antennen (11₁ bis 11₅) auch gemäß einer Kommunikationsbedingung zu bestimmen.

7. Antennensteuervorrichtung (10a) nach Anspruch 2 oder 6, wobei die Kommunikationsbedingung das Wetter und/oder eine benötigte Kommunikationsgeschwindigkeit beinhaltet.

8. Verteiltes Antennensystem zum Ausbilden eines Funkkommunikationssystems, das mehrere lineare Zellen aufweist, von denen jede von mehreren Antennen (11₁ bis 11₅) gebildet wird, die zum Kommunizieren mit einer Mobilstation verwendet werden, welche sich entlang eines vorgegebenen Weges bewegt, und in denen die einzelnen Antennen (11₁ bis 11₅) jeweils eine Richtcharakteristik auf eine Richtung einstellen, die der des Weges der Mobilstation gleich ist, und ein identisches Signal mit einer identischen Frequenz senden, und die zwei Frequenzen aufweist, die wiederkehrend auf solche Weise zugeteilt werden, dass einander benachbarte lineare Zellen unterschiedliche Frequenzen zum Senden verwenden, wobei
das verteilte Antennensystem dafür ausgelegt ist, für jede von den mehreren Antennen (11₁ bis 11₅) einen Abstand von einer Position der jeweiligen Antenne zu einer Position einer Grenze einer ihr benachbarten linearen Zelle zu berechnen und auf einer Basis des berechneten Abstands eine Stärke eines Funksignals, das von der jeweiligen Antenne gesendet werden soll, so zu bestimmen, dass sie an der Grenze zur benachbarten linearen Zelle höchstens so groß wird wie ein spezifischer Wert, und
in jeder von den linearen Zellen eine Leistungsverteilung auf die einzelnen Antennen (11₁ bis 11₅), welche die lineare Zelle bilden, die eine erste Zelle ist, so einzustellen, dass sie mit einem Abstand zu einer Position der Grenze der benachbarten linearen Zelle, die eine zweite Zelle ist, in einer Richtung der Antennenrichtcharakteristik der einzelnen Antennen (11₁ bis 11₅) allmählich geringer wird, so dass ein minimaler Wert eines Signalleistung-zu-Störleistung-Verhältnisses einer dritten linearen Zelle, die eine identische Frequenz wie die erste lineare Zelle verwendet, im Vergleich zu einem Fall, wo die gleiche Gesamtsendeleistung, die von den mehreren Antennen der Antennensteuervorrichtung gesendet wird, gleichmäßig auf alle Antennen verteilt wird, verbessert ist.

9. Verteiltes Antennensystem nach Anspruch 8, wobei das verteilte Antennensystem dafür ausgelegt ist, eine Leistungsverteilung auf die einzelnen Antennen (11₁ bis 11₅) auch gemäß einer Kommunikationsbedingung zu bestimmen.

10. Verteiltes Antennensystem nach Anspruch 9, wobei die Kommunikationsbedingung das Wetter und/oder eine benötigte Kommunikationsgeschwindigkeit beinhaltet.

## Revendications

1. Dispositif de commande d'antenne (10a) pour commander une pluralité d'antennes (11₁ à 11₅) qui sont utilisées pour communiquer avec une station mobile qui se déplace selon une trajectoire prédéterminée dans un système de communication radio qui inclut une pluralité de cellules linéaires dont chacune est formée par les antennes (11₁ à 11₅) et dans chacune desquelles chacune des antennes (11₁ à 11₅) définit une directionnalité dans une même direction qu'une trajectoire de la station mobile et émet un signal identique à une fréquence identique, et qui dispose de deux fréquences qui sont allouées de façon récurrente de telle sorte que des cellules linéaires adjacentes utilisent des fréquences différentes pour l'émission ; dans lequel :
le dispositif de commande d'antenne (10a) est configuré de manière à ce qu'il calcule, pour chacune de la pluralité d'antennes (11₁ à 11₅), une distance depuis une position de chaque antenne jusqu'à une frontière d'une cellule linéaire qui lui est adjacente, et de manière à ce qu'il détermine une puissance d'un signal radio qui doit être émis depuis chaque antenne de manière à ce qu'elle devienne égale ou inférieure à une valeur spécifique au niveau de la frontière de la cellule linéaire adjacente sur la base de la distance calculée ; et
le dispositif de commande d'antenne (10a) est configuré de manière à ce qu'il règle, dans chacune des cellules linéaires, la distribution de puissance sur chacune des antennes (11₁ à 11₅) qui forment une première cellule linéaire de manière à ce qu'elle soit diminuée progressivement en fonction de la distance dans une direction de directionnalité d'antenne de chacune des antennes (11₁ à 11₅) jusqu'à une position de la frontière de la cellule linéaire adjacente, laquelle est une deuxième cellule linéaire, de telle sorte que la valeur minimum d'un rapport de puissances signal sur interférence d'une troisième cellule linéaire qui utilise une fréquence identique à celle de la première cellule linéaire soit améliorée par comparaison avec un cas dans lequel la même puissance d'émission totale qui est émise depuis la pluralité des antennes du dispositif de commande d'antenne est distribuée de façon uniforme sur chacune des antennes.

2. Dispositif de commande d'antenne (10a) selon la revendication 1, dans lequel le dispositif de commande d'antenne (10a) est configuré de manière à ce qu'il détermine la distribution de puissance sur chacune des antennes (11₁ à 11₅) également conformément à une condition de communication.

3. Dispositif de commande d'antenne selon la revendication 1, dans lequel, dans chacune des cellules linéaires, le dispositif de commande d'antenne est en outre configuré de manière à ce qu'il règle un angle de dépression (θ₁ à θ₅) de chacune des antennes (12₁ à 12₅) qui forment la cellule linéaire de manière à ce qu'il soit augmenté progressivement en fonction de la distance dans une direction de directionnalité d'antenne de chacune des antennes (12₁ à 12₅).

4. Dispositif de commande d'antenne (10b) selon la revendication 1, dans lequel :
le dispositif de commande d'antenne (10b) est configuré de manière à ce qu'il sélectionne et attribue, dans chacune des cellules linéaires, de la puissance à certaines des antennes (11₁ à 11₅) qui forment une première cellule linéaire.

5. Dispositif de commande d'antenne (10b) selon la revendication 4, dans lequel le dispositif de commande d'antenne (10b) est configuré de manière à ce qu'il attribue de la puissance à une antenne à l'intérieur d'une portée de laquelle une station mobile est localisée et à une antenne qui est adjacente à l'antenne à l'intérieur d'une portée de laquelle la station mobile est localisée.

6. Dispositif de commande d'antenne (10a) selon la revendication 4, dans lequel le dispositif de commande d'antenne (10a) est configuré de manière à ce qu'il détermine une sélection des antennes (11₁ à 11₅) également conformément à une condition de communication.

7. Dispositif de commande d'antenne (10a) selon la revendication 2 ou 6, dans lequel la condition de communication inclut au moins un élément conditionnel pris parmi une situation météorologique et une vitesse de communication requise.

8. Système d'antennes distribuées pour former un système de communication radio qui inclut une pluralité de cellules linéaires dont chacune est formée par une pluralité d'antennes (11₁ à 11₅) qui sont utilisées pour communiquer avec une station mobile qui se déplace selon une trajectoire prédéterminée et dans chacune desquelles chacune des antennes (11₁ à 11₅) définit une directionnalité dans une même direction qu'une trajectoire de la station mobile et émet un signal identique à une fréquence identique, et qui dispose de deux fréquences qui sont allouées de façon récurrente de telle sorte que des cellules linéaires adjacentes utilisent des fréquences différentes pour l'émission ; dans lequel :
le système d'antennes distribuées est configuré de manière à ce que : il calcule, pour chacune de la pluralité d'antennes (11₁ à 11₅), une distance depuis une position de chaque antenne jusqu'à une frontière d'une cellule linéaire qui lui est adjacente, et de manière à ce qu'il détermine une puissance d'un signal radio qui doit être émis depuis chaque antenne de manière à ce qu'elle devienne égale ou inférieure à une valeur spécifique au niveau de la frontière de la cellule linéaire adjacente sur la base de la distance calculée ; et de manière à ce que :
il règle, dans chacune des cellules linéaires, la distribution de puissance sur chacune des antennes (11₁ à 11₅) qui forment la cellule linéaire, laquelle est une première cellule, de manière à ce qu'elle soit diminuée progressivement en fonction de la distance dans une direction de directionnalité d'antenne de chacune des antennes (11₁ à 11₅) jusqu'à une position de la frontière de la cellule linéaire adjacente, laquelle est une deuxième cellule, de telle sorte que la valeur minimum d'un rapport de puissances signal sur interférence d'une troisième cellule linéaire qui utilise une fréquence identique à celle de la première cellule linéaire soit améliorée par comparaison avec un cas dans lequel la même puissance d'émission totale qui est émise depuis la pluralité des antennes du dispositif de commande d'antenne est distribuée de façon uniforme sur chacune des antennes.

9. Système d'antennes distribuées selon la revendication 8, dans lequel le système d'antennes distribuées est configuré de manière à ce qu'il détermine la distribution de puissance sur chacune des antennes (11₁ à 11₅) également conformément à une condition de communication.

10. Système d'antennes distribuées selon la revendication 9, dans lequel la condition de communication inclut au moins un élément conditionnel pris parmi une situation météorologique et une vitesse de communication requise.
